# EUROPEAN PATENT APPLICATION

(11) **EP 2 600 615 A1**
(43) Date of publication of application: **05.06.2013**
(21) Application number: 11777204.6
(22) Date of filing: 18.05.2011
(51) Int. Cl.: H04N 13/00, H04N 5/445

(54) **METHOD, DEVICE AND SYSTEM FOR CONTROLLING GRAPH-TEXT DISPLAY IN THREE-DIMENSION TELEVISION**

(30) Priority: 25.08.2010 CN 201010270008
(71) Applicant: Huawei Technologies Co., Ltd., Shenzhen, Guangdong 518129 (CN)
(72) Inventor: ZHANG, Yuanyuan, Shenzhen 518129 Guangdong (CN); SHI, Teng, Shenzhen 518129 Guangdong (CN); ZHANG, Chuxiong, Shenzhen 518129 Guangdong (CN)
(74) Representative: Epping - Hermann - Fischer
(86) International application number: PCT/CN2011/074228
(87) International publication number: WO 2011/137785

(57) **Abstract**

Embodiments of the present invention are related to the field of television technologies, and disclose a method, device and system for controlling graphics text display in a three-dimensional television, to control a depth position of displaying a graphics text in a three-dimensional television. The method includes: receiving a message that carries depth indication information and is sent by a server, where the depth indication information is used to indicate a depth position of displaying a graphics text in a three-dimensional view; obtaining the depth indication information from the message carrying the depth indication information; and controlling the depth position of displaying a graphics text according to the depth indication information. According to the embodiments of the present invention, the depth position of displaying a graphics text in a three-dimensional television can be controlled, so that a graphics text can be displayed in front of a video, without deterioration of display quality.

## Description

This application claims priority to Chinese Patent Application No. 201010270008.1, filed with the Chinese Patent Office on August 25, 2010 and entitled "METHOD, DEVICE AND SYSTEM FOR CONTROLLING GRAPHICS TEXT DISPLAY IN THREE-DIMENSIONAL TELEVISION", which is incorporated by reference herein in its entirety.

### FIELD OF THE INVENTION

The present invention relates to the field of television technologies, and in particular, to a method, device and system for controlling graphics text display in a three-dimensional television.

### BACKGROUND OF THE INVENTION

A graphics text is an indispensable part of a television system. The graphics text may be an electronic program guide (Electronic Program Guide, EPG), a subtitle, a message, and the like. In a two-dimensional television, the method for displaying the graphics text is as follows: A video is displayed in a video plane, the graphic text is displayed in a graphics plane, the graphics plane overlays the video plane, and a display position of the graphics text in a two-dimensional view is controlled according to position information indicated by a graphics text bit stream or position information configured by default.

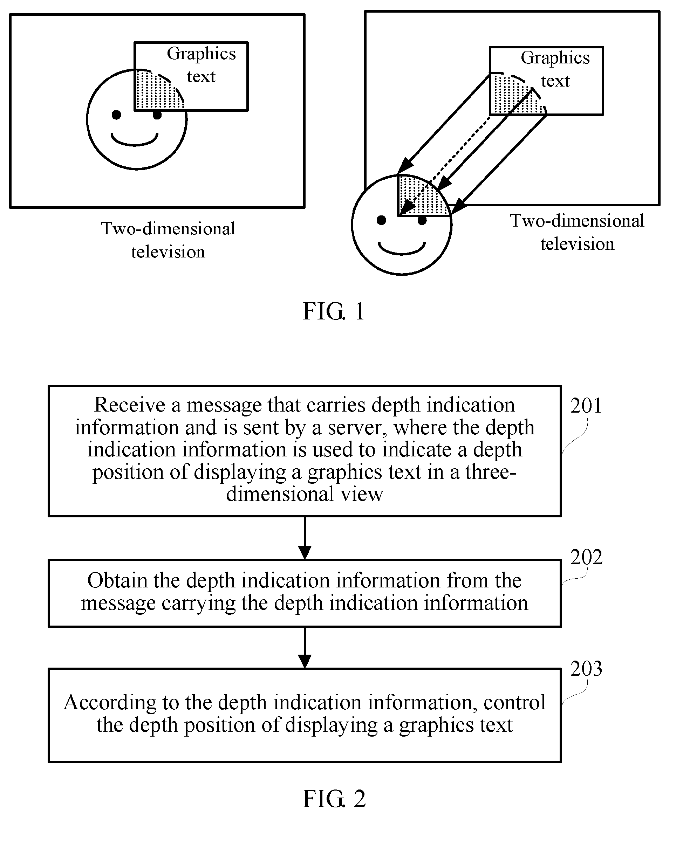

The inventor finds in practice that, in a three-dimensional television, if the above method is still used, a user may sense, by using a device, such as a pair of special three-dimensional glasses or a special three-dimensional screen, that the graphics text is displayed on a screen. However, when the projection area of the graphics text on the screen partially intersects with the projection area of the video on the screen, and the user senses, by using the device, such as a pair of special three-dimensional glasses or a special three-dimensional screen, that the video is displayed over the screen, display quality of the graphics text deteriorates. As shown in FIG. 1, the graphics text intersecting with the projection area of the video on the screen becomes obscure, affecting user experience. To ensure display quality of the graphics text, a depth position of displaying a graphics text needs to be controlled in a three-dimensional television to enable the graphics text to be displayed in front of the video.

### SUMMARY OF THE INVENTION

Embodiments of the present invention provide a method, device and system for controlling graphics text display in a three-dimensional television, for controlling a depth position of displaying a graphics text in a three-dimensional television.

An embodiment of the present invention provides a method for controlling graphics text display in a three-dimensional television, including:
receiving a message that carries depth indication information and is sent by a server, where the depth indication information is used to indicate a depth position of displaying the graphics text in a three-dimensional view;
obtaining the depth indication information from the message carrying the depth indication information; and
according to the depth indication information, controlling the depth position of displaying the graphics text.

An embodiment of the present invention provides a device for controlling graphics text display in a three-dimensional television, including:
a receiving module, configured to receive a message that carries depth indication information and is sent by a server, where the depth indication information is used to indicate a depth position of displaying a graphics text in a three-dimensional view;
an obtaining module, configured to obtain the depth indication information from the message carrying the depth indication information; and
a control module, configured to control, according to the depth indication information, the depth position of displaying the graphics text.

An embodiment of the present invention provides a system for controlling graphics text display in a three-dimensional television, including the preceding device for controlling graphics text display in a three-dimensional television and a server; where
the server is configured to send a message, which carries depth indication information, to the device for controlling graphics text display in the three-dimensional television, where the depth indication information is used to indicate a depth position of displaying the graphics text in a three-dimensional view.

Compared with the prior art, the embodiments of the present invention have the following beneficial effects:

According to the embodiments of the present invention, the "depth indication information" is used to indicate the depth position of displaying a graphics text in a three-dimensional view. According to the embodiments of the present invention, after the depth indication information sent by the server is received, the depth position of displaying a graphics text can be controlled according to the depth indication information. In this way, the depth position of displaying a graphics text in a three-dimensional television can be controlled, so that a graphics text can be displayed in front of a video, without deterioration of display quality.

### BRIEF DESCRIPTION OF THE DRAWINGS

To illustrate the technical solutions in the embodiments of the present invention more clearly, the following briefly describes the accompanying drawings required for describing the embodiments. Apparently, the accompanying drawings in the following description merely show some embodiments of the present invention, and persons of ordinary skill in the art can derive other drawings from these accompanying drawings without creative efforts.

FIG. 1 is a schematic diagram of video display in a conventional two-dimensional television and three-dimensional television;

FIG. 2 is a schematic flow chart of a method for controlling graphics text display in a three-dimensional television according to an embodiment of the present invention;

FIG. 3 is a schematic flow chart of a device for controlling graphics text display in a three-dimensional television according to an embodiment of the present invention; and

FIG. 4 is a schematic structural diagram of a system for controlling graphics text display in a three-dimensional television according to an embodiment of the present invention.

### DETAILED DESCRIPTION OF THE EMBODIMENTS

Embodiments of the present invention provide a method, device and system for controlling graphics text display in a three-dimensional television, for controlling a depth position of displaying the graphics text in the three-dimensional television without affecting the original service procedure of the three-dimensional television. In this way, the graphics text is displayed in front of a video, without deterioration of display quality.

The technical solutions in the embodiments of the present invention are clearly and completely described in the following with reference to the accompanying drawings in the embodiments of the present invention. Apparently, the embodiments in the following description are merely a part rather than all of the embodiments of the present invention. All other embodiments obtained by persons of ordinary skill in the art based on the embodiments of the present invention without creative effects shall fall within the protection scope of the present invention.

Referring to FIG. 1, FIG. 1 is a schematic flow chart of a method for controlling graphics text display in a three-dimensional television according to an embodiment of the present invention. As shown in FIG. 1, the control method includes the following steps:

101. Receive a message that carries depth indication information and is sent by a server, where the depth indication information is used to indicate a depth position of displaying the graphics text in a three-dimensional view.

In this embodiment, the message that carries the depth indication information and is sent by the server can be received in any one of the following manners:

(1) Receive a three-dimensional video bit stream sent by the server, where the three-dimensional video bit stream includes the depth indication information.

For example, supplemental enhancement information (Supplemental Enhancement Information, SEI) in the three-dimensional video bit stream may include the depth indication information.

(2) Receive the graphics text bit stream sent by the server, where the graphics text bit stream includes the depth indication information.

For example, a sample entry box (Sample Entry Box) in the graphics text bit stream may include the depth indication information.

(3) Receive electronic program guide EPG metadata sent by the server, where the electronic program guide EPG metadata includes the depth indication information.

For example, an extensible markup language (Extensible Markup Language, XML) element in the electronic program guide EPG metadata may include the depth indication information. The XML element may be any one of a broadcast discovery record (BCDiscoveryRecord), a schedule event fragment (ScheduleEventFragment), or an on-demand program fragment (OnDemandProgramFragment).

(4) Receive a session description protocol (Session Description Protocol, SDP) file sent by the server, where the SDP file includes the depth indication information.

For example, an "a =" line in the SDP file may include the depth indication information.

In this embodiment, the depth indication information may specifically be graphics plane shift information or identification information.

The graphics plane shift information is used to indicate, when a graphics text is displayed in a three-dimensional view, a horizontal shift amount of the graphics text which is relative to a display position of the graphics text in a two-dimensional view.

The identification information is used to identify collaborative display of the graphics text and a left video or a right video.

102. Obtain the depth indication information from the message carrying the depth indication information.

103. Control, according to the depth indication information, the depth position of displaying the graphics text.

In this embodiment, if the depth indication information is the graphics plane shift information, step 103 is implemented as follows:
collaboratively displaying the graphics text after horizontal shift and the three-dimensional video according to the depth indication information, to implement control of the depth position of displaying a graphics text.

In this embodiment, if the depth indication information is the identification information, step 103 is implemented as follows:
collaboratively displaying the graphics text and the left video or the right video according to the depth indication information (that is, the identification information), to implement control of the depth position of displaying the graphics text.

According to this embodiment of the present invention, the "depth indication information" is used to indicate the depth position of displaying the graphics text in the three-dimensional view. According to this embodiment of the present invention, after the depth indication information sent by the server is received, the depth position of displaying a graphics text can be controlled according to the depth indication information. In this way, the depth position of displaying a graphics text in the three-dimensional television can be controlled, so that the graphics text can be displayed in front of the video, without deterioration of display quality.

With respect to different manners in which the server transmits the depth indication information, the following describes in detail a method for controlling graphics text display in the three-dimensional television according to an embodiment of the present invention.

### Embodiment 1

In this embodiment, a server may carry depth indication information in a three-dimensional video bit stream for transmission, where the depth indication information is graphics plane shift information. The specific method is: defining supplemental enhancement information (SEI) information, where the SEI information includes the depth indication information; and transmitting the SEI information as a part of the three-dimensional video bit stream.

The SEI information is specifically defined in Table 1, including:
(1) Graphics_plane_shift_cancel_flag: used to indicate whether horizontal shift is required when a graphics text is collaboratively displayed with a current left or right video frame;
(2) Graphics_shift_Plane_amount: used to indicate a horizontal shift amount when the graphics text is collaboratively displayed with a current left or right video frame.

**Table 1**

| | |
|---|---|
| Graphics_plane_shift_semi() { | |
| Graphics_plane_shift_cancel_flag | 1: indicates that the prior Graphics plane shift SEI information is canceled, and that graphics plane shift is not required. |
| | 0: indicates that the current Graphics plane shift SEI message is used subsequently to perform |
| | graphics plane shift. |
| if( ! graphics_plane_shift_cancel_flag ) { | |
| graphics_plane_shift_amount | A horizontal shift amount when the graphics text is collaboratively displayed with a current left or right video frame. |
| } | |
| Graphics_plane_shift_reserved_byte | Reserved byte |
| } } | |

The process according to Embodiment 1 is as follows:

1) A server generates SEI information including depth indication information, and transmits the SEI information as a part of a three-dimensional video bit stream.

2) After receiving the three-dimensional video bit stream, a terminal obtains the depth indication information carried in the SEI information from the three-dimensional video bit stream.

3) The terminal receives a graphics text bit stream sent by the server.

4) The terminal decodes the three-dimensional video, writes a left video frame and a right video frame alternately into a video plane for storing, and then alternately sends the frames to a mixer.

5) The terminal parses the graphics text bit stream sent by the server.

6) The terminal determines, according to Graphics_plane_shift_cancel_flag in the SEI information, whether horizontal shift is required for the graphics text; if it is required, step 7 is performed; if it is not required, this process is skipped.

7) The terminal writes the graphics text that is to be displayed collaboratively with a current left or right video frame into a temporary storage area of the graphics plane, and performs corresponding shift processing on graphics text data in the temporary storage area of the graphics plane according to the type (left video or right video) of the video frame to be mixed and graphics plane shift amount information.

For example, if the video frame to be mixed is the left video frame, corresponding right shift processing is performed on the graphics text data in the temporary storage area of the graphics plane according to the graphics plane shift amount information; if the video frame to be mixed is a right video frame, corresponding left shift processing is performed on the graphics text data in the temporary storage area of the graphics plane according to the graphics plane shift amount information.

8) Send, to the mixer, the graphics text data that has undergone shift processing.

9) The mixer mixes a video in the video plane with the graphics text data and output for display.

The mixer can mix the left video frame in the video plane with the graphics text data that has undergone corresponding right shift processing and output for display; and mix the right video frame in the video plane with the graphics text data that has undergone corresponding left shift processing and output for display. In this way, the depth position of the graphics text play is controlled.

In this embodiment of the present invention, the terminal may specifically be a set top box, or an integrated three-dimensional television set having the function of a set top box.

### Embodiment 2

In this embodiment, a server may carry depth indication information in a graphics text bit stream for transmission, where the depth indication information is graphics plane shift information. The graphics text bit stream may be in accordance with the timed text (Timed Text) standard defined in the 3rd generation partnership project (3rd Generation Partnership Project, 3GPP).

It is defined in the timed text standard that a bit stream compliant with the timed text standard includes a Track Header Box (track header box) and a Sample Entry Box (sample entry box). An area is defined in the Track Header Box, and all Text Samples (text samples) must be displayed in this area. Then, the display position of a specific Text Sample is indicated by a class BoxRecord (box record) in the Sample Entry Box.

In this embodiment, the timed text standard in the 3GPP is extended, and a new class GraphicsPlaneShiftRecord (graphics plane shift record) is defined, and is carried in the Sample Entry Box and is used for recording the depth indication information. The class GraphicsPlaneShiftRecord is defined as follows:

```
          Class GraphicsPlaneShiftRecord{
            signed int(16) left_view_shift_amount;
            singed int(16) right_view_shift_amount;
          }
```

After receiving the graphics text bit stream, a terminal obtains the information of GraphicsPlaneShiftRecord from the graphics text bit stream, performs corresponding shift processing on the graphics text, and then mixes the graphics text with a corresponding video bit stream and outputs for display.

### Embodiment 3

In this embodiment, a server may carry depth indication information in EPG metadata for transmission, where the depth indication information is graphics plane shift information. After receiving the EPG metadata, the terminal can obtain the depth indication information from the EPG metadata to control a depth position of displaying a graphics text.

In this embodiment, the EPG metadata includes EPG metadata on a channel, EPG metadata of a live-broadcasting program, and EPG metadata of an on-demand program. An XML element defined for the EPG metadata includes: a broadcast discovery record, a schedule event fragment, and an on-demand program fragment.

In this embodiment, the server may extend any one of the three XML elements to add a sub-element GraphicsPlaneShift (graphics plane shift information) to the XML element, where the GraphicsPlaneShift includes Graphics Plane Shift Amount (graphics plane shift amount) information, as shown in the following.

```
          <xsd:complexType name="GraphicsPlaneShift">
            <xsd:sequence>
                <xsd:element name="Left_View_Shift_Amount" type="xsd:string"/>
                <xsd:element name="Right_View_Shift_Amount" type="xsd:string"/>
            </xsd:sequence>
          </xsd:complexType>
```

After receiving the EPG metadata, a terminal obtains the GraphicsPlaneShift information from the EPG metadata, performs corresponding shift processing on the graphics text, and then mixes the graphics text with a corresponding video bit stream and outputs for display.

### Embodiment 4

In this embodiment, a server may carry depth indication information in an SDP file for transmission, where the depth indication information is graphics plane shift information. After receiving the SDP file, a terminal can obtain the depth indication information from the SDP file, to control a depth position of displaying a graphics text.

In this embodiment, in the SDP file, an "m =" line may be used to describe a media stream (video/audio/graphics text), and an "a =" line may be used to describe a specific attribute of the media stream. That is:
m = media name transmit port
a = attribute (or attribute: attribute value)

It is defined that a = GraphicsPlaneShift, indicating a horizontal shift amount when the graphics text is collaboratively displayed with a left and/or right video.

After receiving the SDP file, the terminal can obtain the depth indication information from an "a = GraphicsPlaneShift" line in the SDP file, perform corresponding shift processing on the graphics text, and then mix the graphics text with a corresponding video bit stream and output for display.

### Embodiment 5

In this embodiment, a server may generate and transmit two paths of graphics text bit streams, which are used for collaborative display with left and right videos, respectively. There are multiple methods for the server to generate two paths of graphics text bit streams. For example, the server shifts the graphics text displayed in a two-dimensional view to the right horizontally according to graphics plane shift information, to obtain one stream of graphics text for collaborative display with a left video; and shifts the graphics text displayed in the two-dimensional view to the left horizontally according to the graphics plane shift information, to obtain the other path of graphics text for collaborative display with a right video. The graphics plane shift information is used to indicate, when the graphics text is displayed in the three-dimensional view, a horizontal shift amount of the graphics text which is relative to the display position of the graphics text in the two-dimensional view. That is, the graphics texts of the two paths of graphics text bit streams have the same content, but have different display positions. Meanwhile, the server transmits identification information indicating whether a graphics text bit stream is collaboratively displayed with a left video or a right video. After receiving a path of the graphics text bit stream and identification information, a terminal displays the graphics text bit stream with the corresponding video collaboratively according to the identification information.

In this embodiment, in an SDP file, an "m =" line is used to describe a media stream (video/audio/graphics text), and an "a =" line is used to describe a specific attribute of the media stream.

It is defined that a = leftviewflag and a = rightviewflag, indicating collaborative display with a left video and a right video, respectively.

In the SDP file, an "m =" line of the graphics text bit stream for collaborative display with the left video includes an "a =" line, where a = leftviewflag; and an "m =" line of the graphics text bit stream for collaborative display with the right video includes an "a =" line, where a = rightviewflag.

After receiving the SDP file, the terminal can obtain the identification information of the graphics text bit stream from the "a =" line, and collaboratively display the graphics text bit stream with the corresponding video according to the identification information of the graphics text bit stream.

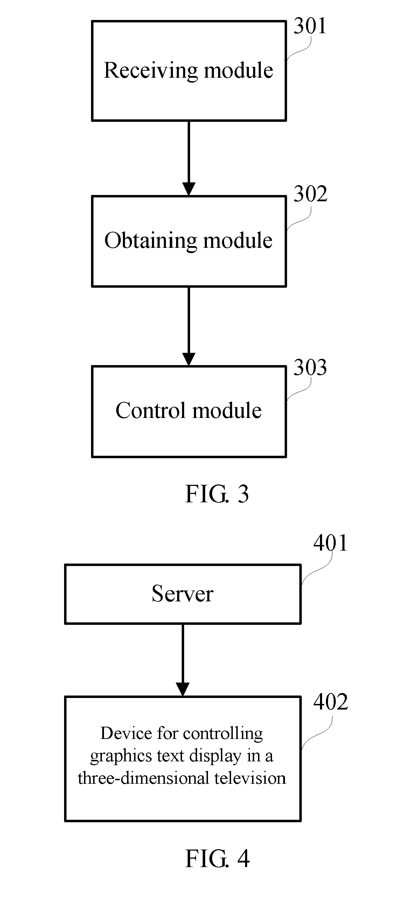

Referring to FIG. 3, FIG. 3 is a schematic structural diagram of a control device for controlling graphics text display in a three-dimensional television according to an embodiment of the present invention. As shown in FIG. 3, the control device may include:
a receiving module 301, configured to receive a message that carries depth indication information and is sent by a server, where the depth indication information is used to indicate a depth position of displaying the graphics text in a three-dimensional view;
an obtaining module 302, configured to obtain the depth indication information from the message carrying the depth indication information; and
a control module 303, configured to control, according to the depth indication information, the depth position of displaying a graphics text.

In this embodiment, the receiving module 301 may be configured to receive a three-dimensional video bit stream sent by the server, where the three-dimensional video bit stream includes the depth indication information. For example, supplemental enhancement information (SEI) in the three-dimensional video bit stream may include the depth indication information.

Alternatively, the receiving module 301 is configured to receive a graphics text bit stream sent by the server, where the graphics text bit stream includes the depth indication information. For example, a sample entry box (Sample Entry Box) in the graphics text bit stream may include the depth indication information.

Alternatively, the receiving module 301 is configured to receive electronic program guide EPG metadata sent by the server, where the electronic program guide EPG metadata includes the depth indication information. For example, an extensible markup language (Extensible Markup Language, XML) element in the electronic program guide EPG metadata may include the depth indication information. The XML element may be any one of a broadcast discovery record (BCDiscoveryRecord), a schedule event fragment (ScheduleEventFragment), or an on-demand program fragment (OnDemandProgramFragment).

Alternatively, the receiving module 301 is configured to receive a session description protocol SDP file sent by the server, where the session description protocol SDP file includes the depth indication information. For example, an "a =" line in the SDP file may include the depth indication information.

In this embodiment, the depth indication information may be graphics plane shift information, where the graphics plane shift information is used to indicate a horizontal shift amount of a graphic text displaying in a three-dimensional view, and the horizontal shift is related to the graphics text displaying position of in a two-dimensional view.

Correspondingly, the control module 303 is configured to, according to the depth indication information, horizontally shift the graphics text and collaboratively display the graphics text and a three-dimensional video, to implement control of the depth position of displaying a graphics text.

In this embodiment, the depth indication information may be identification information, where the identification information is used to identify collaborative display of the graphics text and a left video or a right video. Correspondingly, the control module 303 is configured to collaboratively display the graphics text and the left video or the right video according to the depth indication information, to implement control of the depth position of displaying a graphics text.

With the control device provided in this embodiment of the present invention, the "depth indication information" is used to indicate the depth position of displaying the graphics text in a three-dimensional view. According to this embodiment of the present invention, after the depth indication information sent by the server is received, the depth position of displaying a graphics text can be controlled according to the depth indication information. In this way, the depth position of displaying a graphics text in a three-dimensional television can be controlled, so that the graphics text can be displayed in front of a video, without deterioration of display quality.

Referring to FIG. 4, FIG. 4 is a schematic structural diagram of a control system for controlling graphics text display in a three-dimensional television according to an embodiment of the present invention. As shown in FIG. 4, the control system may include:
a server 401, configured to send a message carrying depth indication information to a device 402 for controlling graphics text display in a three-dimensional television, where the depth indication information is used to indicate a depth position of displaying a graphics text in a three-dimensional view; and
the device 402 for controlling graphics text display in a three-dimensional television, configured to receive the message that carries the depth indication information and is sent by the server 401, obtain the depth indication information from the message carrying the depth indication information, and control the depth position of the graphic text display according to the depth indication information.

The structure of the device 402 for controlling graphics text display in a three-dimensional television is the same as that illustrated in FIG. 3, which is not detailed in this embodiment.

In this embodiment, the server 401 may be configured to send a three-dimensional video bit stream to the control device 402, where the three-dimensional video bit stream includes the depth indication information. For example, supplemental enhancement information (SEI) in the three-dimensional video bit stream may include the depth indication information.

Alternatively, the server 401 is configured to send a graphics text bit stream to the control device 402, where the graphics text bit stream includes the depth indication information. For example, a sample entry box (Sample Entry Box) in the graphics text bit stream may include the depth indication information.

Alternatively, the server 401 is configured to send electronic program guide EPG metadata to the control device 402, where the electronic program guide EPG metadata includes the depth indication information. For example, an extensible markup language XLM element in the electronic program guide EPG metadata may include the depth indication information. The XML element is any one of a broadcast discovery record, a schedule event fragment, or an on-demand program fragment.

Alternatively, the server 401 is configured to send a session description protocol SDP file to the control device 402, where the session description protocol SDP file includes the depth indication information. For example, an "a =" line in the session description protocol (SDP) file may include the depth indication information.

In this embodiment, the depth indication information may be graphics plane shift information, where the graphics plane shift information is used to indicate a horizontal shift amount of a graphic text displaying in a three-dimensional view, and the horizontal shift is related to the graphics text displaying position in a two-dimensional view. Correspondingly, the control device 402 may, according to the depth indication information, horizontally shift the graphics text and collaboratively display the graphics text and a three-dimensional video, to implement control of the depth position of displaying a graphics text.

In this embodiment, the depth indication information is identification information, where the identification information is used to identify collaborative display of the graphics text and a left video or a right video. The graphics text is generated by the server 401 and is horizontally shifted according to the graphics plane shift information in advance. The graphics plane shift information is used to indicate a horizontal shift amount of the graphic text displaying in a three-dimensional view, and the horizontal shift is related to the graphics text displaying position in a two-dimensional view. Correspondingly, the control device 402 may collaboratively display the graphics text and the left video or the right video according to the depth indication information, to implement control of the depth position of displaying a graphics text.

With the control system provided in this embodiment of the present invention, the depth position of displaying the graphics text in a three-dimensional television can be controlled, so that the graphics text can be displayed in front of a video, without deterioration of display quality.

Persons of ordinary skill in the art should understand that all or a part of the steps of the method embodiments may be implemented by a program instructing relevant hardware. The program may be stored in a computer readable storage medium. When the program runs, the steps of the method embodiments are executed. The storage medium includes any medium that can store program codes, such as a U-disk, a read-only memory (Read-Only Memory, ROM), a random access memory (Random Access Memory, RAM), a magnetic disk, or an optical disk.

The foregoing describes in detail a method, device and system for controlling graphics text display in a three-dimensional television according to the embodiments of the present invention. The principle and implementation of the present invention are illustrated with reference to the specific embodiments in this specification. The description of the embodiments is only for better understanding the method and core idea of the present invention. Persons of ordinary skill can make modifications and variations to the specific implementation and application scope of the present invention based on the idea of the present invention. Therefore, the content of the specification should not be construed as a limit on the present invention.

## Claims

1. A method for controlling graphics text display in a three-dimensional television, comprising:
receiving a message that carries depth indication information and is sent by a server, wherein the depth indication information is used to indicate a depth position of displaying the graphics text in a three-dimensional view;
obtaining the depth indication information from the message carrying the depth indication information; and
according to the depth indication information, controlling the depth position of displaying the graphics text.

2. The method according to claim 1, wherein the receiving a message that carries depth indication information and is sent by a server comprises:
receiving a three-dimensional video bit stream sent by the server, wherein the three-dimensional video bit stream comprises the depth indication information;
or receiving a graphics text bit stream sent by the server, wherein the graphics text bit stream comprises the depth indication information;
or receiving electronic program guide (EPG) metadata sent by the server, wherein the electronic program guide EPG metadata comprises the depth indication information;
or receiving a session description protocol (SDP) file sent by the server, wherein the session description protocol (SDP) file comprises the depth indication information.

3. The method according to claim 2, wherein
supplemental enhancement information (SEI) in the three-dimensional video bit stream comprises the depth indication information;
a sample entry box Sample Entry Box in the graphics text bit stream comprises the depth indication information;
an extensible markup language (XML) element in the electronic program guide (EPG) metadata comprises the depth indication information, wherein the XML element is any one of a broadcast discovery record, a schedule event fragment, or an on-demand program fragment;
an "a =" line in the session description protocol SDP file comprises the depth indication information.

4. The method according to claim 2 or 3, wherein the depth indication information is graphics plane shift information, and the graphics plane shift information is used to indicate, when the graphics text is displayed in the three-dimensional view, a horizontal shift amount of the graphics text which is relative to a display position of the graphics text in a two-dimensional view.

5. The method according to claim 4, wherein the controlling the depth position of displaying the graphics text according to the depth indication information comprises:
horizontally shifting the graphics text according to the depth indication information, and then collaboratively displaying the graphics text and the three-dimensional video, to implement the control of the depth position of display the graphics text.

6. The method according to claim 2 or 3, wherein the depth indication information is identification information, and the identification information is used to identify collaborative display of the graphics text and a left video or a right video.

7. The method according to claim 6, wherein the controlling the depth position of displaying the graphics text according to the depth indication information comprises:
collaboratively displaying the graphics text and the left video or the right video according to the depth indication information, to implement the control of the depth position of displaying the graphics text.

8. A device for controlling graphics text display in a three-dimensional television, comprising:
a receiving module, configured to receive a message that carries depth indication information and is sent by a server, wherein the depth indication information is used to indicate a depth position of displaying a graphics text in a three-dimensional view;
an obtaining module, configured to obtain the depth indication information from the message carrying the depth indication information; and
a control module, configured to control the depth position of displaying the graphics text according to the depth indication information.

9. The control device according to claim 8, wherein
the receiving module is configured to receive a three-dimensional video bit stream sent by the server, wherein the three-dimensional video bit stream comprises the depth indication information;
or configured to receive a graphics text bit stream sent by the server, wherein the graphics text bit stream comprises the depth indication information;
or configured to receive electronic program guide (EPG) metadata sent by the server, wherein the electronic program guide (EPG) metadata comprises the depth indication information;
or configured to receive a session description protocol (SDP) file sent by the server, wherein the session description protocol (SDP) file comprises the depth indication information.

10. The control device according to claim 9, wherein
supplemental enhancement information (SEI) in the three-dimensional video bit stream comprises the depth indication information;
a sample entry box Sample Entry Box in the graphics text bit stream comprises the depth indication information;
an extensible markup language (XML) element in the electronic program guide EPG metadata comprises the depth indication information, wherein the (XML) element is any one of a broadcast discovery record, a schedule event fragment, or an on-demand program fragment;
an "a =" line in the session description protocol (SDP) file comprises the depth indication information.

11. The control device according to claim 9 or 10, wherein the depth indication information is graphics plane shift information, wherein the graphics plane shift information is used to indicate a horizontal shift amount of the graphics text display in the three-dimensional view relative to the graphics text display in a two-dimensional view.

12. The control device according to claim 11, wherein the control module is configured to, according to the depth indication information, horizontally shift the graphics text and collaboratively display the graphics text and a three-dimensional video, to implement the control of the depth position of displaying the graphics text.

13. The control device according to claim 9 or 10, wherein the depth indication information is identification information, and the identification information is used to identify collaborative display of the graphics text and a left video or a right video.

14. The control device according to claim 13, wherein the control module is configured to collaboratively display the graphics text and the left video or the right video according to the depth indication information, to implement the control of the depth position of displaying the graphics text.

15. A system for controlling graphics text display in a three-dimensional television, comprising the device for controlling graphics text display in a three-dimensional television according to any one of claims 8 to 14 and a server; wherein
the server is configured to send a message carrying depth indication information to the device for controlling graphics text display in the three-dimensional television, wherein the depth indication information is used to indicate a depth position of displaying a graphics text in a three-dimensional view.

16. The control system according to claim 15, wherein
the server is configured to send a three-dimensional video bit stream to the control device, wherein the three-dimensional video bit stream comprises the depth indication information;
or configured to send a graphics text bit stream to the control device, wherein the graphics text bit stream comprises the depth indication information;
or configured to send electronic program guide (EPG) metadata to the control device, wherein the electronic program guide (EPG) metadata comprises the depth indication information;
or configured to send a session description protocol (SDP) file to the control device, wherein the session description protocol (SDP) file comprises the depth indication information.

17. The control system according to claim 16, wherein
supplemental enhancement information (SEI) in the three-dimensional video bit stream comprises the depth indication information;
a sample entry box Sample Entry Box in the graphics text bit stream comprises the depth indication information;
an extensible markup language (XML) element in the electronic program guide (EPG) metadata comprises the depth indication information, wherein the (XML) element is a broadcast discovery record, a schedule event fragment, or an on-demand program fragment;
an "a =" line in the session description protocol (SDP) file comprises the depth indication information.
